(19) Europäisches Patentamt
European Patent Office
Office européen des brevets

(11) **EP 4 745 731 A1**

(12) **EUROPEAN PATENT APPLICATION**

(43) Date of publication:
**20.05.2026 Bulletin 2026/21**

(21) Application number: **24306912.7**

(22) Date of filing: **15.11.2024**

(51) International Patent Classification (IPC):
**G06F 3/041** (2006.01)    **G06F 3/044** (2006.01)

(52) Cooperative Patent Classification (CPC):
**G06F 3/04166; G06F 3/0446**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **DARTHENAY, Frederic**
**14906 Caen (FR)**
• **TOURRET, Jean-Robert**
**14906 Caen (FR)**
• **GOUSSIN, Franck**
**14906 Caen (FR)**
• **GEFFROY, Vincent**
**14906 Caen (FR)**

(74) Representative: **Miles, John Richard**
**NXP Semiconductors**
**Intellectual Property Group**
**The Cattle Barn, Upper Ashfield Farm**
**Hoe Lane**
**Romsey, Hampshire SO51 9NJ (GB)**

Remarks:
Amended claims in accordance with Rule 137(2) EPC.

(54) **TOUCH SCREEN SENSING**

(57)    The disclosure relates to a touch screen sensing system (1100), example embodiments of which comprise: a touch screen panel (1103) having a plurality pairs of touch sensing electrodes ($\text{row}_{1\text{-Nrow}}$, $\text{col}_{1\text{-Ncol}}$) arranged in rows and columns extending across the panel (1103); and a plurality of transceivers ($1101_{1\text{-Nrow}}$, $1102_{1\text{-Ncol}}$), each of the plurality of transceivers ($1101_{1\text{-Nrow}}$, $1102_{1\text{-Ncol}}$) connected to send and receive sensing signals ($701_{1\text{-n}}$) to and from a respective one of the plurality of touch sensing electrodes ($\text{row}_{1\text{-Nrow}}$, $\text{col}_{1\text{-Ncol}}$), wherein each one of the plurality of transceivers ($1101_{1\text{-Nrow}}$, $1102_{1\text{-Ncol}}$) is configured to transmit a sensing signal ($701_{1\text{-n}}$) including a range of frequencies over a signal bandwidth ($702_{1\text{-n}}$), the sensing signals ($701_{1\text{-n}}$) being orthogonal to each other.

Fig. 11

EP 4 745 731 A1

**Description**

<u>Field</u>

The disclosure relates to a system and method for touch screen sensing using orthogonal sensing signals.

<u>Background</u>

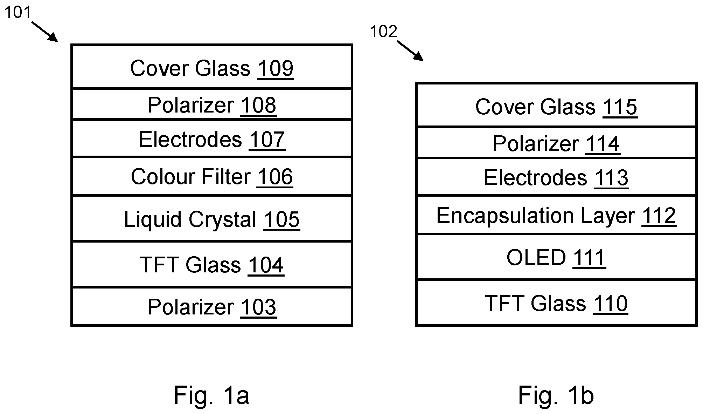

Computer display screens, for example used in portable electronic devices such as mobile phones and tablets, commonly include a touch sensing capability as an input interface for operation of the device. A touch sensing capability can be implemented using a dedicated touch sensor layer built into a display screen panel assembly. Figures 1a and 1b are schematic cross-sections illustrating two possible alternative arrangements for a touch screen panel, with Figure 1a illustrating an LCD touch screen panel 101 and Figure 1b an OLED touch screen panel 102. In the LCD touch screen panel 101, an electrode layer 107 is provided between a second polarizer layer 108 and a colour filter layer 106. A first polarizer layer 103 is behind a TFT (thin film transistor) layer 104, on top of which is a liquid crystal layer 105 driven by signals provided to the TFT layer 104. A colour filter layer 106 on top of the liquid crystal layer 105 divides the panel into red, green and blue sub-pixels. A cover glass layer 109 on top of the second polarizer layer 108 provides a top surface of the display panel 101. In the OLED panel 102, a TFT layer 110 drives an OLED layer 111, which is covered by an encapsulation layer 112, on top of which is an electrode layer 113, a polarizer layer 114 and a cover glass layer 115.

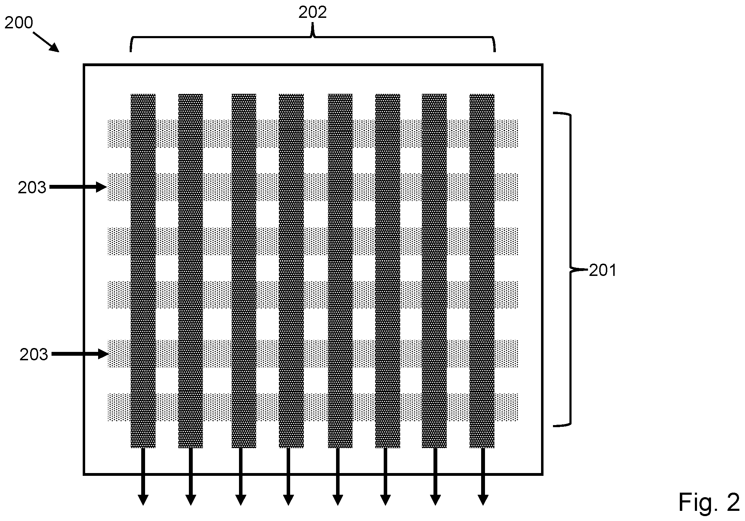

In each case, the electrode layer 107, 113 typically comprises an array of transparent electrodes extending across the panel, the electrodes being arranged in rows and columns. An example electrode layer 200 is illustrated in Figure 2, comprising an array of electrodes arranged in rows 201 and columns 202. To determine an area on the panel that is being touched, the array of electrodes is addressed by sending and receiving sensing signals 203 to and from each row and column.

<u>Summary</u>

According to a first aspect there is provided a touch screen sensing system comprising:

a touch screen panel having a plurality of pairs of touch sensing electrodes arranged in rows and columns extending across the panel; and
a plurality of transceivers, each of the plurality of transceivers connected to send and receive sensing signals to and from a respective one of the plurality of touch sensing electrodes,
wherein each one of the plurality of transceivers is configured to transmit a sensing signal including a range of frequencies over a signal bandwidth, the sensing signals being orthogonal to each other.

The pairs of touch sensing electrodes may be orthogonally aligned to each other, i.e. with row electrodes being orthogonal to column electrodes. In some alternative examples the row and column electrodes may not be orthogonal to each other, i.e. being aligned at an angle other than 90 degrees.

The sensing signals may have an orthogonality to each other of at least 40 dB. Expressed another way, the sensing signals may have an orthogonality to each other that is greater than the signal to noise ratio (SNR) of the touch screen sensing system. The SNR may for example be defined as the average SNR over all of the received sensing signals.

The plurality of transceivers may be arranged to sequentially transmit the sensing signals to the plurality of touch sensing electrodes with a circular correlation, i.e. periodicity, over successive frames of sensing signals sent to the touch sensing electrodes. Transmitting the sensing signals with a circular correlation minimises any high frequency changes in signals between frames, thus reducing any electromagnetic noise emissions from the system.

Each sensing signal sent to one of the touch sensing electrodes may be in the form of a chirp, with the range of frequencies in each chirp varying from a minimum frequency to a maximum frequency.

The minimum frequency for the plurality of sensing signals over the plurality of transceivers may range from a lower minimum frequency to an upper minimum frequency. The maximum frequency over the plurality of transceivers may range from a lower maximum frequency to an upper maximum frequency.

In some examples, the range of frequencies in each chirp may vary linearly from the minimum to maximum frequency.

In some examples, the range of frequencies in each chirp varies non-linearly from the minimum to maximum frequency.

In some examples, the range of frequencies in each chirp varies quadratically from the minimum to maximum frequency.

The plurality of transceivers may comprise a first plurality of row transceivers and a second plurality of column transceivers. The first and second pluralities may be equal or different. Each column transceiver may comprise a receiver that is configured to calculate and output a correlation between a received signal and each of a plurality of expected signals corresponding to sensing signals transmitted by the plurality of row transceivers.

Each receiver in the plurality of column transceivers may further be configured to apply a decorrelation matrix to the output correlation to provide a calibrated output correlation.

The output correlation, or calibrated output correlation, from the plurality of column transceivers provides an indication of a location on a touch on the panel, in which a signal received by one or more of the column transceivers correlates with a sensing signal transmitted to one or more of the row electrodes.

It should be understood that the terms 'row' and 'column' may be used interchangeably, depending on the orientation of the panel and are not to be construed as limiting the panel to any particular orientation but only to distinguish electrodes extending transverse to each other, typically in orthogonal directions, across the panel.

According to a second aspect there is provided a method of operating a touch screen sensing system comprising:

a touch screen panel having a plurality of pairs of touch sensing electrodes arranged in rows and columns extending across the panel; and
a plurality of transceivers, each of the plurality of transceivers connected to send and receive sensing signals to and from a respective one of the plurality of touch sensing electrodes,
the method comprising:
transmitting a plurality of sensing signal over a signal bandwidth from each of the plurality of transceivers, each sensing signal including a range of frequencies over the signal bandwidth, the sensing signals being orthogonal to each other.

The sensing signals may have an orthogonality to each other of at least 40 dB.

The plurality of transceivers may sequentially transmit the sensing signals to the plurality of touch sensing electrodes with a circular correlation over successive frames of sensing signals sent to and received from the touch sensing electrodes.

Each sensing signal sent to one of the touch sensing electrodes may be in the form of a chirp, the range of frequencies in each chirp varying from a minimum frequency to a maximum frequency.

The minimum frequency for the plurality of sensing signals over the plurality of transceivers may range from a lower minimum frequency to an upper minimum frequency, the range of frequencies in each chirp varying linearly, non-linearly or quadratically from the minimum to maximum frequency.

Other features relating to the first aspect may also apply to the method according to the second aspect.

These and other aspects of the invention will be apparent from, and elucidated with reference to, the embodiments described hereinafter.

Brief description of Drawings

Embodiments will be described, by way of example only, with reference to the drawings, in which:

Figure 1a is a schematic sectional diagram of an example LCD touch screen;

Figure 1b is a schematic sectional diagram of an example OLED touch screen;

Figure 2 is a schematic plan view diagram of an example electrode layer of a touch screen;

Figure 3 is a schematic diagram of an example touch screen panel sensing system;

Figure 4 is a schematic circuit diagram illustrating an example model of capacitances and resistances in the region of a row and column intersection;

Figure 5 is a schematic plot of signal to noise ratio (SNR) as a function of frequency for an example touch screen panel sensing system;

Figure 6 is a further schematic plot of signal to noise ratio (SNR) as a function of frequency for the touch screen panel sensing system of Figure 3, indicating a range of transmitted sensing signal frequencies over a signal bandwidth;

Figure 7 is a schematic plot of SNR as a function of frequency for an example touch screen panel sensing system according to the present disclosure;

Figures 8a and 8b are schematic plots of a series of example sensing signal chirps having a linear variation over a range of frequencies;

Figures 9a and 9b are schematic plots of a series of example sensing signal chirps having a quadratic variation over a range of frequencies;

Figures 10a and 10b are schematic plots of a series of example sensing signal modulus chirps over a range of frequencies;

Figure 11 is a schematic diagram of an example touch screen panel sensing system;

Figure 12 is a schematic diagram of an example row transceiver for the touch screen panel system of Figure 11;

Figure 13 is a schematic diagram of an example column transceiver for the touch screen panel system of Figure 11;

Figure 14 is a flow diagram illustrating an example methods of calibrating a touch screen panel system;

Figure 15 is a flow diagram illustrating an example method of calculating a decorrelation matrix;

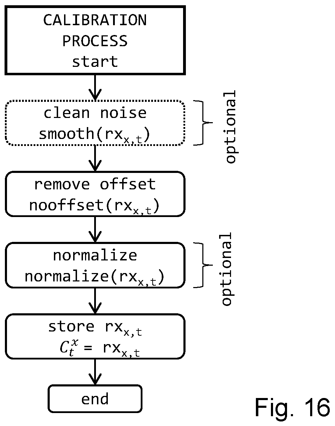

Figure 16 is a flow diagram illustrating an example calibration process;

Figure 17 is a flow diagram illustrating a raw signal calibration process;

Figure 18 is a flow diagram illustrating a calibration process using amplitude and phase polynomial fitting;

Figure 19 is a flow diagram illustrating an example amplitude polynomial fitting process; and

Figure 20 is a flow diagram illustrating an example phase polynomial fitting process.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

Detailed description of embodiments

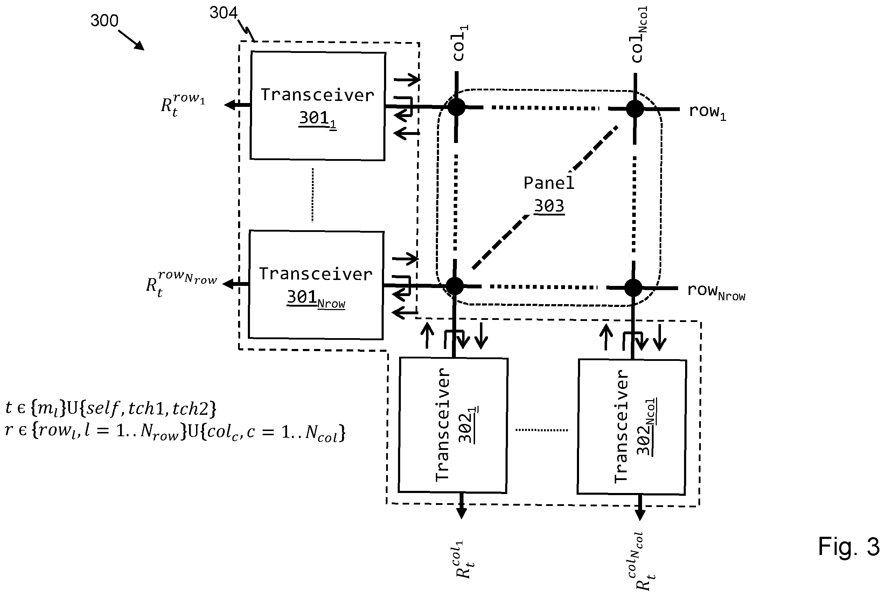

An example touch screen sensing system 300 is illustrated schematically in Figure 3. The system 300 comprises a panel 303 having an array of electrodes arranged in rows $row_{1\text{-}Nrow}$ and columns $col_{1\text{-}Ncol}$, the electrodes forming Ncol columns and Nrow rows. The number of rows and columns may be equal or may differ from each other. Throughout the present disclosure, the terms 'row' and 'column' may be used interchangeably and are used only to identify the relation between a first set of electrodes and a second transversely or orthogonally aligned set of electrodes across a common panel. What is considered a row may be considered a column, and vice versa, when the panel 303 is rotated. A plurality of transceivers comprises a first plurality of row transceivers $301_{1\text{-}Nrow}$ connected to the row electrodes $row_{1\text{-}Nrow}$ and a second plurality of column transceivers $302_{1\text{-}Ncol}$ connected to the column electrodes $col_{1\text{-}Ncol}$. The transceivers $301_{1\text{-}Nrow}$, $302_{1\text{-}Ncol}$ are embedded in a sensing module 304 that operates to measure the presence and amount of touch on the panel 303. The sensing module 304 comprise further features for generating and processing sensing signals to be sent and received by the transceivers $301_{1}$-Nrow, $302_{1}$-Ncol.

Each transceiver $301_{1\text{-}Nrow}$, $302_{1\text{-}Ncol}$ comprises a transmitter arranged to transmit a signal in the voltage domain to a corresponding row or column on the panel 303 and a receiver that senses a current that provided through the panel 303 by the other transceivers and itself.

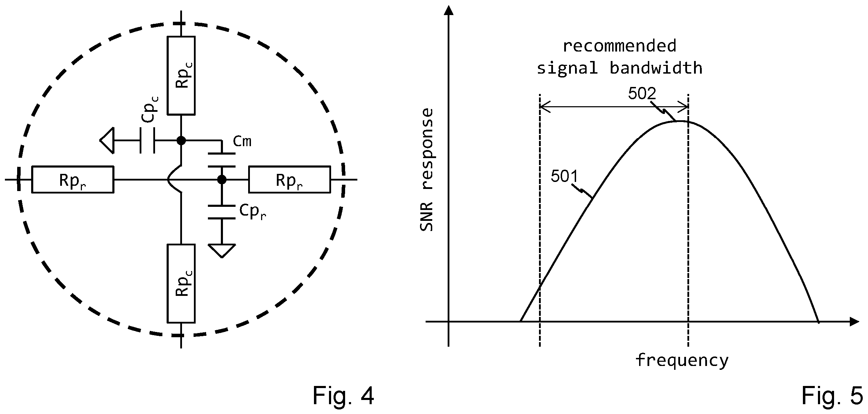

Each of the row electrodes $row_{1\text{-}Nrow}$ and column electrodes $col_{1\text{-}Ncol}$ may be composed of a transparent conductive layer. The intersection of each row and column creates a coupling capacitance Cm that couples the row and column electrodes. An example model representation of capacitances and resistances in the region of an intersection is illustrated schematically in Figure 4. Parasitic row and column capacitances $Cp_r$ and $Cp_c$ are also present, together with resistances $Rp_r$, $Rp_c$ for each row and column. This results in a MIMO (multiple input, multiple output) system, in which each transceiver can operate as both a transmitter and a receiver at the same time.

When a touch is applied to the panel, the capacitances Cm, $Cp_r$, $Cp_c$ in the region of the touch change value by a measurable amount, which results in the currents received by the receiver units in the transceivers connected to the rows and columns changing. A difference in these current levels is measured to determine the presence, location and degree of touch being applied.

In one arrangement, each row transceiver may inject a common 'self' signal and one unique 'mutual' signal, while each column transceiver injects only a 'self' signal. A 'self' signal is used to detect where touches are located, while a 'mutual' signal is used to resolve 'ghost' touches in case of multiple touches. There are as many 'mutual' signals as there are rows.

Each column transceiver $302_{1-Ncol}$ senses its own current delivered to the panel plus a weighted sum of currents from coupling of all transmitters connected through the panel 303. Each receiver outputs the level $R_y^x$ attached to each received signal of interest, where y is an index for the signals and x is an index for the transceiver attached to either a row or a column. Each row receiver measures a level for 'self', while each column receiver measures a current for {'self','mutual$_1$',...,'mutual$_{Nrow}$'}.

The total amount of parasitic capacitance over a row or column is typically high compared to the coupling capacitance Cm, which makes detection of touch signals based on changes in the coupling capacitance difficult. In a particular example, the ratio Cm/Cprtot can be around 50dB for a large panel, where Cprtot is the total parasitic row capacitance over all rows.

The parasitic resistances Rp$_r$, Rp$_c$ of the row and column electrodes shown in Figure 4, combined with the parasitic capacitances Cp$_r$, Cp$_c$, result in a complex network. The network has a low pass behaviour from transmitter output to a column where a particular row and column intersection of interest is located and from the columns to the receivers. This results in a complex transfer function that directly drives the SNR (signal to noise ratio) of the system. A peak SNR response is located at lower frequencies for larger panels.

For a typical SNR curve, as shown schematically in Figure 5, a first positive slope 501 depicts the 'Cm' capacitive coupling. With the electrodes being driven in the voltage domain and sensed in the current domain, $i = j2\pi f C_m V$, where V is the voltage at the crossing point. At higher frequencies, low pass filtering occurs across rows and columns with a slope order greater than two, so the total response is composed of a zero (Cm) plus multiple poles. The 'self' and 'mutual' signals have to be placed at a lower frequency side of the peak SNR 502 for best efficiency, as indicated in Figure 5. However, for larger panels there may not be sufficient bandwidth and signals may therefore extend over the peak response, resulting in a reduced overall SNR.

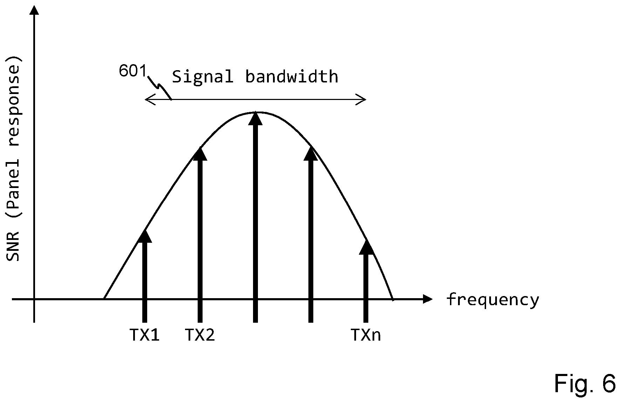

Sensing signals in conventional touch screen sensing systems may comprise sinewave tones having a frequency separation that is dictated by the refresh frame rate. For larger panels, this results in some of the sensing signals being allocated far away from the peak SNR, as shown schematically in Figure 6 where transmitted signals TX1-n are distributed over a signal bandwidth 601 covering a peak SNR response. This results in a poorer SNR for the signals further away from the peak and therefore a poorer overall SNR for the complete system. A general problem to be addressed therefore is that larger touch screen panels suffer from a reduced bandwidth and signals that are allocated over a signal bandwidth covering a peak response frequency show a reduced SNR. This can result in an upper practical limit on the size of a touch screen panel using conventional sensing signals.

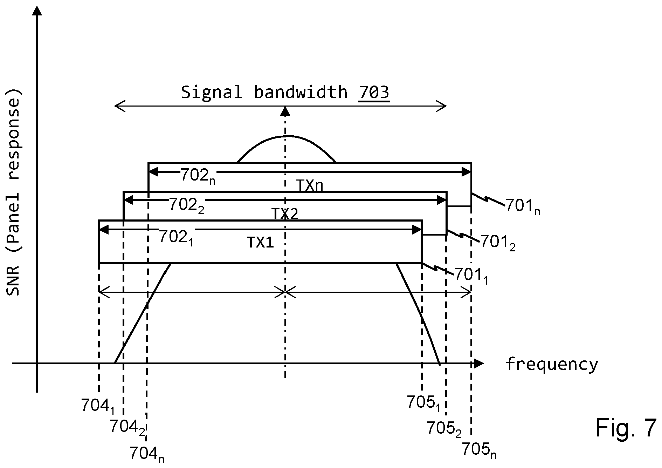

According to the touch screen sensing systems disclosed herein, a spread spectrum is used instead for each sensing signal, i.e. each of the plurality of sensing signals includes a range of frequencies over a signal bandwidth, the sensing signals being orthogonal to each other. This enables the sensing signals to use the available bandwidth more efficiently, resulting in an average SNR response that is acceptable for all transceivers. This is illustrated schematically in Figure 7, in which each of the plurality of sensing signals $701_{1-n}$ has a signal bandwidth $702_{1-n}$ that extends across the useable signal bandwidth 703 of the touch screen panel. The range of frequencies in each sensing signal $701_{1-n}$ is from a minimum frequency $704_{1-n}$ to a maximum frequency $705_{1-n}$. The minimum frequency ranges over the sensing signals from between a lower minimum frequency $704_1$ to an upper minimum frequency $704_n$., in this case corresponding to the 1st and nth sensing signal respectively. Similarly, the maximum frequency ranges over the sensing signals from between a lower maximum frequency $705_1$ to an upper maximum frequency $705_n$., in this case also corresponding to the 1st and nth sensing signal respectively. The bandwidth $702_{1-n}$ of each of the sensing signals is the same in this example, with each sensing signal having a different minimum and maximum frequency.

Each sensing signal including a range of frequencies over the signal bandwidth may be provided in the form of a chirp. To optimise efficiency, the sensing signals transmitted over each frame should constitute a set of orthogonal signals. The set of orthogonal signals may have a circular correlation over successive frames, i.e. with no time domain signal disruption at the frame boundaries. The orthogonality of the sensing signals does not, however, need to be perfect since the panel in any case will tend to affect the orthogonality of the transmitted signals and this can be compensated for using a decorrelation matrix. A correlation of around 40 dB or better may be acceptable, i.e. the sensing signals being at least 40 dB orthogonal to each other. A window applied to the set of signals may account for an imperfect circular correlation over each frame.

Since possible interference signals will fall within a fraction of the signal bandwidth, operation of the system using such signals will tend to be robust against interference.

Using a spread spectrum for the sensing signals allows for each signal to efficiently occupy bandwidth close to the peak SNR. This results in an average SNR response that is acceptable for all signals.

The transmitted sensing signals constitute a set of (practically) orthogonal signals, which allows the signals to be distinguished at the receive side and enables measurement of the amount of coupling. The orthogonality relies on a cycling correlation over a frame period. The correlation results are output at the frame rate.

The sensing signals may be periodic, i.e. have a circular correlation of successive frames, with no disruption at the window boundary. The circular correlation pattern cycles from frame to frame, which reduces any EMC signal emissions. The chirps themselves occupy a low bandwidth, thereby also reducing EMC emissions.

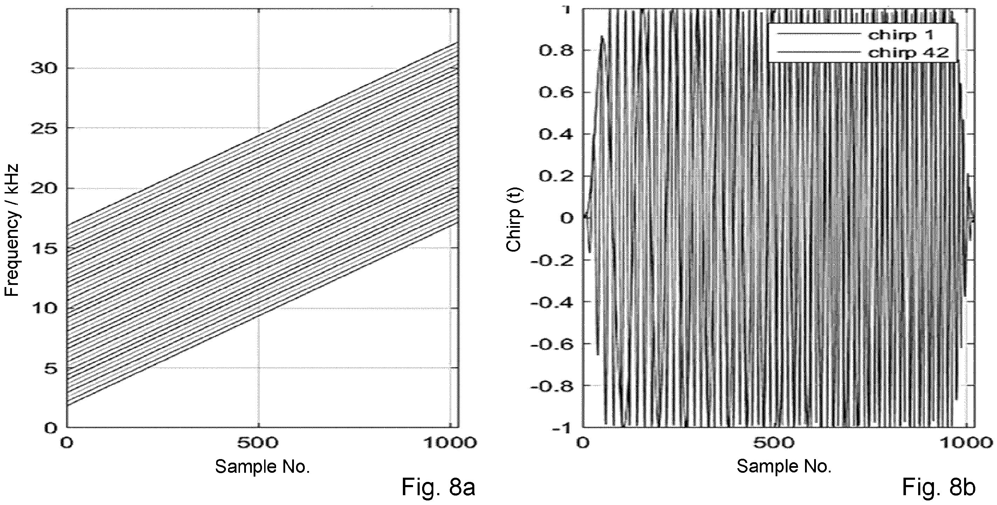

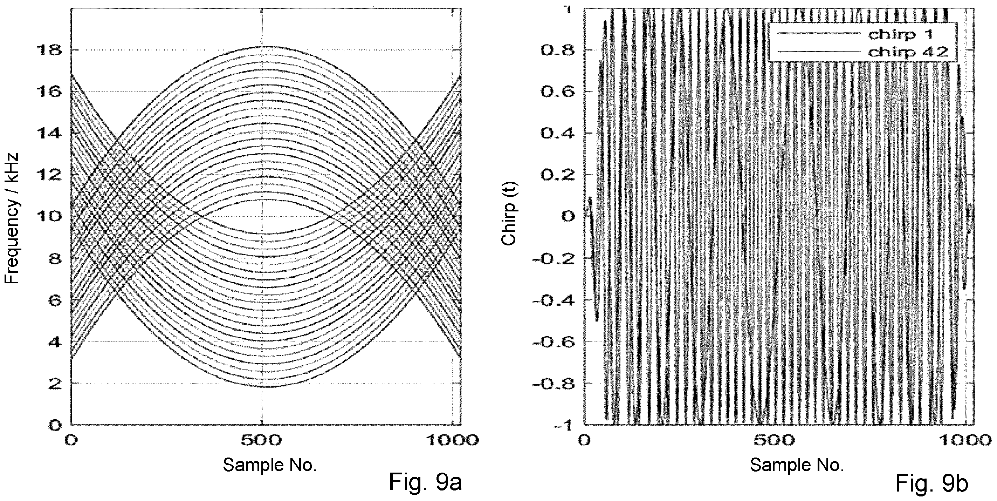

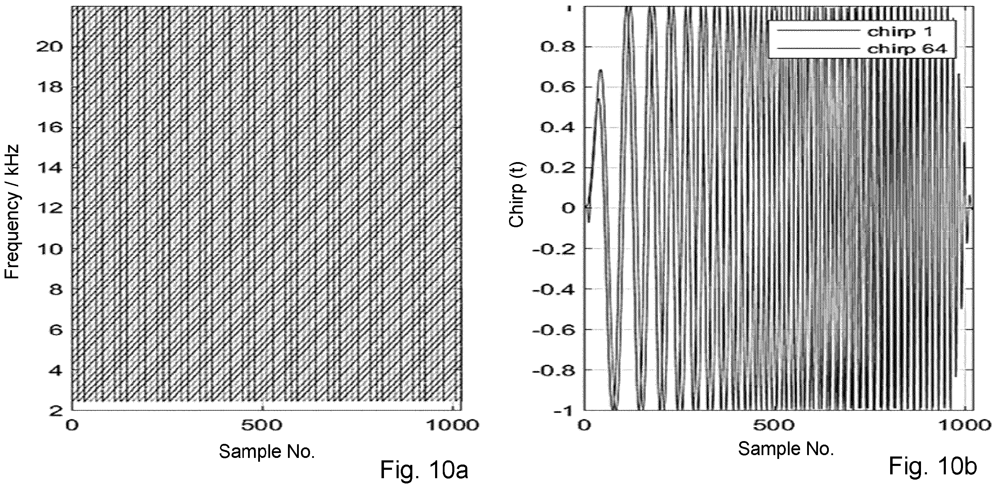

The sensing signals transmitted to the touch sensing panel may be in the form of chirps. Examples of the form of such chirps are illustrated in Figures 8, 9 and 10. Figure 8 illustrates linear chirps, Figure 9 quadratic chirps and Figure 10 modulus chirps.

Figure 8a illustrates a plot of frequency as a function of sample number over a single frame comprising series of 42 linear chirps. Figure 8b illustrates the same chirps in terms of amplitude over sample number. The chirps are repeated with a frame rate of 300 Hz, making each frame (in this example comprising 1000 samples) around 3.3 ms. In this example the centre frequency of the signal bandwidth is 20 kHz. The chirps extend between a minimum frequency and a maximum frequency, the lower minimum frequency being in this case around 2 kHz and the upper minimum frequency around 17 kHz, while the lower maximum frequency is around 17 kHz and the upper maximum frequency is around 32 kHz.

For a linear chirp, each chirp starts from a minimum frequency and ends at a maximum frequency, the frequency being swept linearly over each frame period. Where $T_{adc}$ is the ADC clock period, $T_f = OSR * T_{adc}$ is the frame period (where OSR is the number of samples per frame), $N_r$ is the number of signals and $t = [0, T_f]$, which repeats cyclically with a periodicity $T_f$ to avoid disruptions in continuous mode, $K_m = max(floor(F_{c,panel}/F_f), 0)$, which defines the minimum allowable frequency, each chirp can be defined as follows:

$$freq_{former}(t) = F_f N_r \left( \left( t - (K_m + i) \, T_f/N_r \right)/T_f \right)$$

$$ranges\ from\ -(K_m + i)F_f\ to\ \left(N_r - (K_m + i)\right)F_f$$

$$chirp(t) = \sin\left(\pi N_r \left( \left( t - (K_m + i) \, T_f/N_r \right)/T_f \right)^2\right)$$

$$chirp(T_f + t) = \sin\left(\pi N_r \left( \left( (T_f + t) - (K_m + i) \, T_f/N_r \right)/T_f \right)^2\right) = chirp(t)$$

Figure 9a illustrates a further plot of frequency as a function of sample number over a single frame comprising series of 42 quadratic chirps. Figure 9b illustrates the same chirps in terms of amplitude over sample number. As for Figure 8, the number of chirps is 42, the frame rate is 300 Hz and the centre frequency is 20 kHz. Because the chirps vary quadratically rather than linearly, the minimum frequency in this case for some of the chirps is around the middle of each chirp and the maximum frequency at the beginning and end of each chirp, and vice versa for the other chirps. This arrangement allows a smaller overall bandwidth to be used for the same number of chirps, which in this example extends between around 3 kHz and 17 kHz, compared to the larger bandwidth of between around 2 kHz to around 32 kHz for the linear chirps.

Again, where $T_{adc}$ is the ADC clock period, $T_f = OSR * T_{adc}$ is the frame period, $N_r$ is the number of signals and $t = [0, T_f]$, which repeats cyclically with a periodicity $T_f$ to avoid disruptions in continuous mode, $K_m = max(floor(F_{c,panel}/F_f), 0)$, which defines the minimum allowable frequency, and in this case $dF_n = 4 * (ceil((N_r/2)/3))$, defining frequency sweeps to provide for quasi orthogonality, the chirps can be defined as follows:

$$freq_{quadratic}(t) = iF_f + 1/4\,F_f + 3dF_n F_f \left( \left( t - T_f/2 \right)/T_f \right)^2$$

$$for\ j = [1..N_r/2]\,,\ i = j - 1$$

$$freq_{quadratic}(t) = iF_f - 1/4\,F_f - 3dF_nF_f\big((t - T_f/2)/T_f\big)^2 + 3/4\,dF_nF_f$$

$$for\ j = [N_r/2 + 1..N_r]\,,\ i = j - N_r/2$$

$$freq_{quadratic}(t) = freq_{quadratic}(t) + K_m * F_f$$

$$chirp(t) = sin\left(2\pi \oint_T freq(t)\,dt\right)$$

$$chirp\big(T_f + t\big) = chirp(t)$$

Figure 10a illustrates a further plot of frequency as a function of sample number over a single frame comprising series of 42 modulus chirps. Figure 10b illustrates the chirps in terms of amplitude over sample number. Each chirp varies linearly and covers the same frequency range, of in this case between around 2.5 and 22 kHz and therefore has the same minimum and maximum frequency but with the minimum and maximum frequencies for each chirp at a different point over the chirp frame. The number of chirps in this case is 64, the frame rate is again 300 Hz and the centre frequency in this case is 5 kHz. This arrangement allows the same bandwidth to be used for all chirps, thereby making the SNR similar over all chirps.

Again, where $T_{adc}$ is the ADC clock period, $T_f = OSR * T_{adc}$ is the frame period, $N_r$ is the number of signals and $t = [0, T_f]$, which repeats cyclically with a periodicity $T_f$ to avoid disruptions in continuous mode, $K_m = max(floor(F_{c,panel}/F_f), 0)$, which defines the minimum allowable frequency, the modulus chirps can be defined as follows:

$$freq_{modulus}(t) = K_m * F_f + mod\big(freq_{former}, F_f * N_r\big)\,,$$

which ranges between $K_m * F_f$ and $N_r * F_f$, in which all tones select the same amount of each frequency.

$$chirp(t) = sin\left(2 * \pi * \oint_T freq(t) * dt + \pi * \big((K_m + i)/T_f\big)^2\right)$$

$$chirp\big(T_f + t\big) = chirp(t)$$

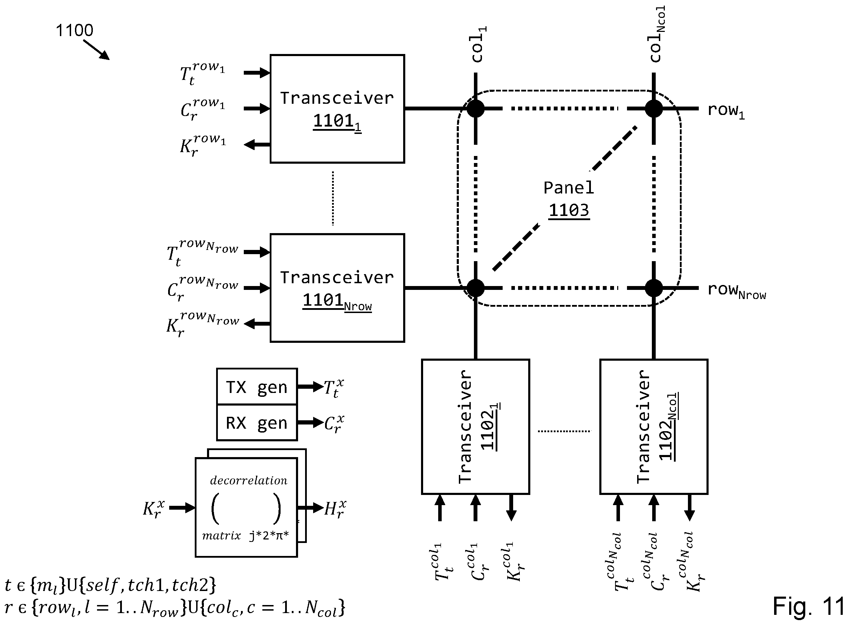

Referring to Figure 11, an example touch screen sensing system 1100 comprises a touch screen panel 1103 having a plurality of pairs of touch sensing electrodes $row_{1\text{-}Nrow}$, $col_{1\text{-}Ncol}$ arranged in rows and columns extending across the panel 1103. Each of a plurality of transceivers $1101_{1\text{-}Nrow}$, $1102_{1\text{-}Ncol}$ is connected to send and receive a sensing signal to and from a respective one of the plurality of touch sensing electrodes $row_{1\text{-}Nrow}$, $col_{1\text{-}Ncol}$. Each one of the plurality of transceivers $1101_{1\text{-}Nrow}$, $1102_{1\text{-}Ncol}$ is configured to transmit a sensing signal including a range of frequencies over a signal bandwidth, the sensing signals being orthogonal to each other. Each sensing signal may, as described above, be in the form of a chirp that can be of various forms.

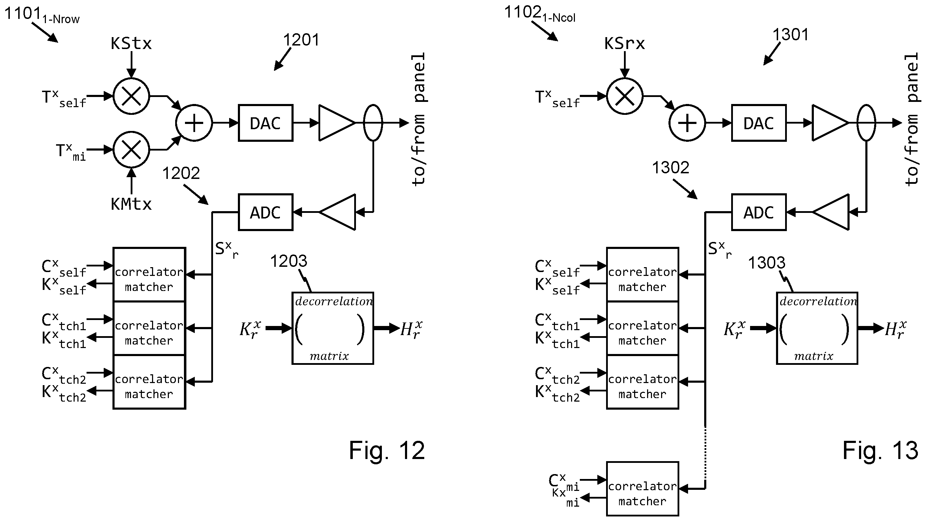

Each transceiver comprises a transmitter and a receiver, example illustrations of which are shown in Figure 12 for an example row transceiver $1101_{1\text{-}Nrow}$ and in Figure 13 for an example column transceiver $1102_{1\text{-}Ncol}$.

Each receiver 1202, 1302 senses at its input a weighted combination of the different transmitted signals $Tx_t$ coupled via the panel 1103. The weighted sum depends on the presence and amount of a touch on the panel.

At the receive side, a level $Kx_r$ of each expected signal ('r') is measured using a 'matcher', which is a correlator that can be implemented either in the time domain or in the frequency domain (depending on the amount of memory and computing resources that can be allowed). There are as many 'matchers' as there are levels (signals) ('r') to measure.

Each 'matcher' has its own reference signal $Cx_r$; which outputs the amount of reference signal contained in the input signal (that is a weighted combination of all signals). Ideally, if all signals are perfectly orthogonal, only the level of signal of interest is output by the correlator. In practice, perfect orthogonality cannot be achieved, but this is not required.

In Figure 11, Cr are the matching patterns, which constitute the receiver signal base, i.e. one base per receiver. These can be in the form of: i) a delayed transmitted signal $Tx_t$; ii) a raw signal; and iii) a reconstructed signal.

Tables 1 and 2 below summarize all items that are depicted in Figure 12 onwards, covering various options to be considered. Table 1 lists different configurations of the system in terms of the chirp signal type (linear, quadratic, modulus) versus a matcher pattern type issued from calibration (i.e. raw, fit/reconstructed, delayed), a level of spectrum efficiency and an indication of the importance of a decorrelation matrix. Table 2 addresses the matcher pattern type versus the implementation complexity (memory, compute resource) and SNR improvement.

Table 1: Chirp type and matcher options

| chirp type | Matcher pattern compatibility | | | spectrum efficiency | decorrelation matrix contribution |
|---|---|---|---|---|---|
| | *raw* | *fit* | *delayed* | | |
| linear | 1 | 1 | 1 | - | + |
| quadratic | 1 | 1 | 1 | 0 | ++ |
| modulus | 1 | 0 | 1 | + | ++ |

Table 2: matcher requirements

| Matcher pattern | memory requirement | pattern compute requirement | decorr. matrix | Calibration process | SNR improvement |
|---|---|---|---|---|---|
| raw | (Nc+3)*(Nr+3) *Ns*4bytes | 0 | yes | raw data | +2dB to 3dB |
| fit | (Nc+3)*(Nr+3) *3*4bytes | (Nc+3) *(Nr+3) | yes | fit/ reconstructed | +1dB to +2dB |
| delayed | (Nc+3)*(Nr+3) *10*4bytes | 0 | yes | best delay data | reference |

The system 1100 illustrated in Figure 11 and described herein uses the following terminology:

$N_{col}$ is the number of columns (index 'c');
$N_{row}$ is the number of rows / lines (index 'l');
$\{m_l\}U\{self, tch1, tch2\}$ is the signal set (index 't');
$N_{tx} = N_{row} + 3$ is the number of transmitted signals;
$\{col_c\}U\{row_l\}$ is the receiver set (index 'x');
$N_{rx} = N_{col} + N_{row}$ *is number of receivers (index "x")* is the number of receivers (index 'x');
Receivers $R^x$ located at the row side receive $\{self, tch1, tch2\}$;
Receivers $R^x$ located at the column side receive $\{m_{l=1..Neol}, self, tch1, tch2\}$;
$N_s$ is the number of samples over which receivers $R^x$ run (index 's');
$E_x$ is the set of signals measures by transceiver 'x';
$T_x$ is the set of signals transmitted by transceiver 'x';

$T_t^x$ is the transmitted signal 't' by transceiver 'x';

$S_t^x$ is the received signal 't' at transceiver 'x';

$S^x$ is the total input signal at transceiver 'x';

$C_r^x$ is the matching pattern of reference signal 'r' at transceiver 'x';

$K_r^x$ is the matching level of input $S^r$ with pattern $C_r^x$ at transceiver 'x';

$V_{r,t}^x$ is the matching level of received signal 't' $S_t^r$ with pattern $C_r^x$ at transceiver 'x';

$\left[D_{r,r}^x\right]$ is the decorrelation matrix of the signal set of transceiver 'x';

$\left[H_r^x\right]$ are the hit values of transceiver 'x'; and

M is the complete hit map.

The total input signal $S^x$ at transceiver 'x' can be defined as:

$$S^x = \sum_{t \epsilon T_x} S_t^r \quad , \quad K_r^x = C_r^x \otimes S^x = \sum_{s=1}^{N_s} C_r^x * S^x \quad , \quad V_{r,t}^x = C_r^x \otimes S_t^x$$

$$= \sum_{s=1}^{N_s} C_r^x * S_t^x \quad , \quad [H_r^x] = [D_{r,r}^x] \ [K_r^x]$$

and the matrix M defining the complete hit map can be defined as:

$$M = \begin{bmatrix} H_{m_1}^{col_1} & \cdots & H_{m_1}^{col_{N_{col}}} & H_{self}^{row_1} & H_{tch1}^{row_1} & H_{tch2}^{row_1} \\ \vdots & \ddots & \vdots & \vdots & \vdots & \vdots \\ H_{m_{N_{row}}}^{col_1} & \cdots & H_{m_{N_{row}}}^{col_{N_{col}}} & H_{self}^{row_{N_{row}}} & H_{tch1}^{row_{N_{row}}} & H_{tch2}^{row_{N_{row}}} \\ H_{self}^{col_1} & \cdots & H_{self}^{col_{N_{col}}} & 0 & 0 & 0 \\ H_{tch1}^{col_1} & \cdots & H_{tch1}^{col_{N_{col}}} & 0 & 0 & 0 \\ H_{tch2}^{col_1} & \cdots & H_{tch2}^{col_{N_{col}}} & 0 & 0 & 0 \end{bmatrix}$$

Figure 12 illustrates a schematic overview of an example single row transceiver of the plurality of row transceivers $1101_{1-Nrow}$. Figure 13 illustrates a schematic overview of an example single column transceiver of the plurality of column transceivers $1102_{1-Ncol}$. Each row transceiver $1101_{1-Nrow}$ comprises a transmitter 1201 and a receiver 1202. The transmitter 1201 is configured to combine and transmit self and mutual signals $Tx_{self}$, $Tx_{mi}$ to a row electrode on the panel as described above. The receiver 1202 is configured to receive signals from the row electrode and may be arranged to correlate these received signals and, based on the self signals, distinguish between different touches on the panel and whether a received signal is a touch or another object (e.g. a water droplet) on the screen. A decorrelation matrix 1203 may be used to apply a calibration to the correlated signals. Similarly, each column transceiver $1102_{1-Ncol}$ comprises a transmitter 1301 and a receiver 1302. The transmitter 1301 is configured to transmit only self signals $Tx_{self}$ to a column electrode on the panel as described above. The receiver 1302 is configured to receive signals from the column electrode and may be arranged to correlate these received signals and, based on the self signals, distinguish between different touches on the panel and whether a received signal is a touch or another object (e.g. a water droplet) on the screen. A decorrelation matrix 1303 may be used to apply a calibration to the correlated signals. In addition, the transmitter 1301 of each column transceiver $1102_{1-Ncol}$ is configured to calculate and output a correlation between a received signal and each of a plurality of expected signals corresponding to sensing signals transmitted by the plurality of row transceivers $1101_{1-Nrow}$, which in this case are the mutual signals $Tx_{mi}$ transmitted by each row transmitter 1201. Based on these correlations, the location and degree of a touch on the screen can be determined.

For matching coefficients $K_r^x$, the aim is to compute the matching coefficients between a received signal that is a weighted combination of a 'receiver signal base' and the reference 'matcher' signal $C_r^x$. This operation happens either in real-time or may be postponed until after all raw data are collected over one frame. In the real-time case, the process involves on-the-fly incoming samples and a 'circular' correlation that resets at the beginning of each frame and outputs the result at the end of the frame. In the postponed case, data are collected over a frame and are then processed either in the frequency domain using FFT and iFFT or in the time domain as previously described. In either case, i.e. whether in the frequency or time domain, storage of the complete raw date is required before proceeding to computation.

The transmitted signals will tend to suffer from transport and latency delay plus some phase distortion, mostly due to the panel. The matching patterns $C_r^x$ constitute the 'receiver signal base' (i.e. one base per receiver) and can include: a delayed transmitted signal $T_t^x$, a raw signal or a reconstructed / calibrated / fit signal. The system 1100 may be calibrated in three different ways based on these matching patterns.

Firstly, calibration may be based on the 'raw' signal. This signal comes from a calibration process that may run at start-up and later in background. Each signal is transmitted as the others are switched off. All samples acquired during the correlator / dft window are stored and constitute the 'raw signal'. This process can be averaged over several frames to reduce noise contribution. This requires a lot of memory but provides the best-in-class touch SNR.

Secondly, calibration may be based on a 'delayed' transmitted signal. A calibration phase takes place to find the best delay to apply to the transmitted signal. This delay depends on the transmitted signal and the receiver and is not unique even if it contains a static common delay. The calibration process sequence is identical to the 'raw signal' one.

Thirdly, calibration may be based on a 'reconstructed/calibrated/fit' signal. Assuming that the transmitted signals can be expressed as sin(Ψ(time)) with Ψ(time)=polynomial(Ai,time) them at receive side it becomes sin(Φ(time)) with Φ(time)=polynomial(Bi,time). Using a fit procedure, the coefficients Bi can be extracted and stored. During normal operation, sin(Φ(time)) can then be reconstructed in real time. This results in lower memory requirements as only a few coefficients Bi are stored instead of the complete 'raw data'. This calibration includes phase distortion, transport delay. The calibration process sequence is identical to the 'raw signal' one previously described.

Calibration results in a decorrelation matrix $\left[D_{r,r}^x\right]$ being generated. The panel affects transmitted signals, which affects the orthogonality of signals at the receive side, This means that a touch that affects a measured level of 'matcher' 'i' also affects level of 'matcher' j#i. This can be counteracted using a decorrelation matrix that is obtained by inverting the cross-correlation of the time domain receiver signal base $C_r^x$ issued from calibration, which is $\left[D_{r,r}^x\right]=\text{inv}(C_r^x * \ C_r^x{}')$. One decorrelation matrix will be required per column. The process runs once all are $C_r^x$ known, and is described below.

If column 'x' receives a weighted sum $S_t^x$ of transmitted signals, the 'matcher' 'r=t' tells the amount $K_t^x$ of transmitted signal 't' that is present in the sum, but the 'matcher' 'r#t' also outputs a coupling amount $V_{r,t}^x$ of transmitted signal 't'.

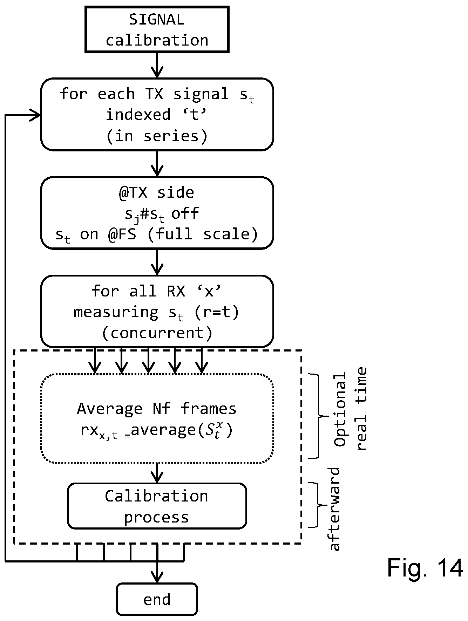

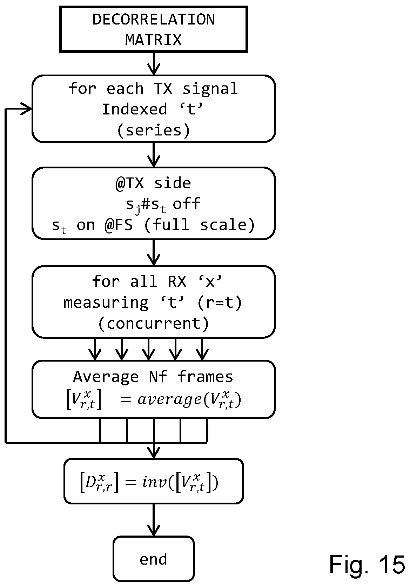

Two example calibration methods are illustrated in Figures 14 and 15, which apply to the 'self' and 'tch1' and 'tch2' (i.e. all receiver and transmitter sides at same time) and to 'sᵢ' (i.e. one by one on the transmitter side). These calibrations run either at start-up or in the background, for example if one frame can be sacrificed to carry out a calibration routine. Certain steps of the signal calibration in Figure 14 may be optional or carried out afterwards. Performing an averaging operation on a number of frames can for example be used to improve the accuracy.

Figure 15 illustrates an example raw signal calibration method. Certain steps may be optional, such as cleaning noise by smoothing and normalising after removal of any offset.

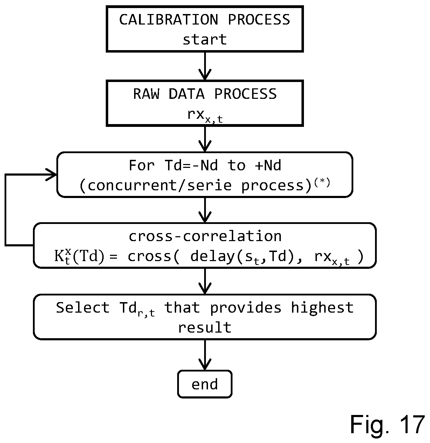

Figure 17 illustrates an example delayed transmitted signal calibration, in which all 'matcher' signals of a transceiver can be used to compute the different Td shifts, where Td is transceiver and signal dependent and in which $C_t^x(time) \ = \ delay(st(time),\ Tdx,\ t)$.

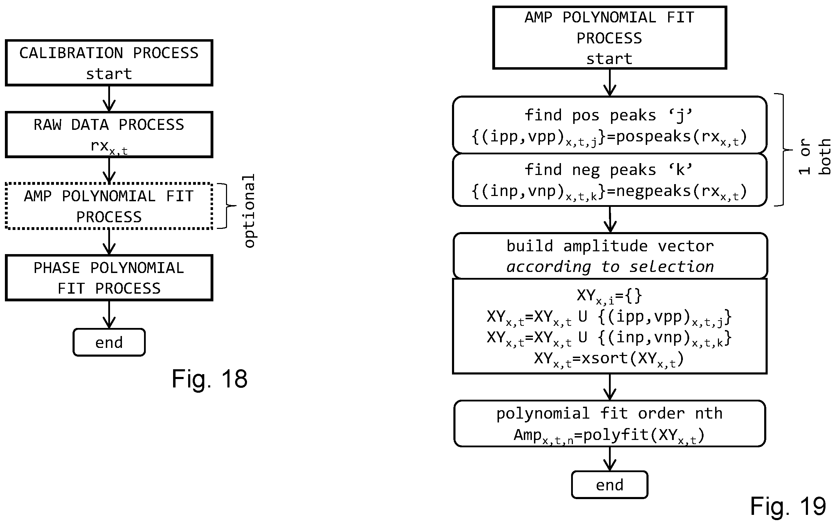

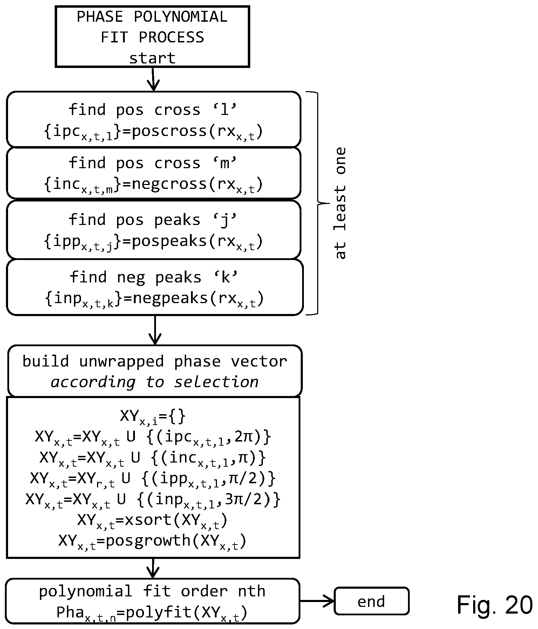

Figures 18, 19 and 20 illustrate example reconstructed / fit / calibrated signal methods. The amplitude polynomial fit process in Figure 19 involves finding positive and/or negative peaks 'j' and 'k', followed by building an amplitude vector according to the selection and generating a polynomial fit order. The phase polynomial fit process in Figure 20 involves finding a positive cross 'l', cross 'm', positive peaks 'j' or negative peaks 'k', followed by building an unwrapped phase vector according to the selection and generating a polynomial fit order. In each of the example methods in Figures 18-20, $C_t^x(time) \ = \ polyval(Ampx,\ t,\ n,\ time) * sin(polyval(Phax,\ t,\ n,\ time))$.

From reading the present disclosure, other variations and modifications will be apparent to the skilled person. Such variations and modifications may involve equivalent and other features which are already known in the art of touch screen systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A touch screen sensing system (1100) comprising:

   a touch screen panel (1103) having a plurality of pairs of touch sensing electrodes ($row_{1\text{-}Nrow}$, $col_{1\text{-}Ncol}$) arranged in rows and columns extending across the panel (1103); and
   a plurality of transceivers ($1101_{1\text{-}Nrow}$, $1102_{1\text{-}Ncol}$), each of the plurality of transceivers ($1101_{1\text{-}Nrow}$, $1102_{1\text{-}Ncol}$) connected to send and receive sensing signals ($701_{1\text{-}n}$) to and from a respective one of the plurality of touch sensing electrodes ($row_{1\text{-}Nrow}$, $col_{1\text{-}Ncol}$),
   wherein each one of the plurality of transceivers ($1101_{1\text{-}Nrow}$, $1102_{1\text{-}Ncol}$) is configured to transmit a sensing signal ($701_{1\text{-}n}$) including a range of frequencies over a signal bandwidth ($702_{1\text{-}n}$), the sensing signals ($701_{1\text{-}n}$) being orthogonal to each other.

2. The touch screen sensing system (1100) of claim 1, wherein the sensing signals ($701_{1\text{-}n}$) have an orthogonality to each other of at least 40 dB.

3. The touch screen sensing system (1100) of claim 1 or claim 2, wherein the plurality of transceivers ($1101_{1\text{-}Nrow}$, $1102_{1\text{-}Ncol}$) are arranged to sequentially transmit the sensing signals ($701_{1\text{-}n}$) to the plurality of touch sensing electrodes ($row_{1\text{-}Nrow}$, $col_{1\text{-}Ncol}$) with a circular correlation over successive frames of sensing signals ($701_{1\text{-}n}$) sent to and received from the touch sensing electrodes ($row_{1\_Nrow}$, $col_{1\text{-}Ncol}$).

4. The touch screen sensing system (1100) of any preceding claim, wherein each sensing signal ($701_{1\text{-}n}$) sent to one of the touch sensing electrodes ($row_{1\text{-}Nrow}$, $col_{1\text{-}Ncol}$) is in the form of a chirp, the range of frequencies ($702_{1\text{-}n}$) in each chirp varying from a minimum frequency ($704_{1\text{-}n}$) to a maximum frequency ($705_{1\text{-}n}$).

5. The touch screen sensing system (1100) of claim 4, wherein the minimum frequency ($704_{1\text{-}n}$) for the plurality of sensing signals over the plurality of transceivers ($1101_{1\text{-}Nrow}$, $1102_{1\text{-}Ncol}$) ranges from a lower minimum frequency ($704_1$) to an upper minimum frequency ($704_n$).

6. The touch screen sensing system (1100) of claim 4 or claim 5, wherein the maximum frequency ($705_{1\text{-}n}$) over the plurality of transceivers ranges from a lower maximum frequency ($705_1$) to an upper maximum frequency ($705_n$).

7. The touch screen sensing system (1100) of any one of claims 4 to 6, wherein the range of frequencies ($702_{1\text{-}n}$) in each chirp varies linearly, non-linearly or quadratically between the minimum and maximum frequencies ($704_{1\text{-}n}$, $705_{1\text{-}n}$).

8. The touch screen sensing system (1100) of any preceding claim, wherein the plurality of transceivers ($1101_{1\text{-}Nrow}$, $1102_{1\text{-}Ncol}$) comprise a first plurality of row transceivers ($1101_{1\text{-}Nrow}$) and a second plurality of column transceivers ($1102_{1\text{-}Ncol}$).

9. The touch screen sensing system (1100) of claim 8, wherein each column transceiver ($1102_{1\text{-}Ncol}$) comprises a receiver that is configured to calculate and output a correlation between a received signal and each of a plurality of expected signals corresponding to sensing signals transmitted by the plurality of row transceivers.

10. The touch screen sensing system (1100) of claim 9, wherein each receiver (1302) in the plurality of column transceivers ($1102_{1\text{-}Ncol}$) is configured to apply a decorrelation matrix (1303) to the output correlation to provide a calibrated output correlation.

11. A method of operating a touch screen sensing system (1100) comprising:

    a touch screen panel (1103) having a plurality of pairs of touch sensing electrodes ($row_{1\text{-}Nrow}$, $col_{1\text{-}Ncol}$) arranged in rows and columns extending across the panel (1103); and
    a plurality of transceivers ($1101_{1\text{-}Nrow}$, $1102_{1\text{-}Ncol}$), each of the plurality of transceivers connected to send and receive sensing signals ($701_{1\text{-}n}$) to and from a respective one of the plurality of touch sensing electrodes ($row_{1\_Nrow}$, $col_{1\text{-}Ncol}$),
    the method comprising transmitting a plurality of sensing signals ($701_{1\text{-}n}$) over a signal bandwidth ($702_{1\text{-}n}$) from each of the plurality of transceivers ($1101_{1\text{-}Nrow}$, $1102_{1\text{-}Ncol}$), each sensing signal including a range of frequencies over the signal bandwidth ($702_{1\text{-}n}$), the sensing signals ($701_{1\text{-}n}$) being orthogonal to each other.

12. The method of claim 11, wherein the sensing signals ($701_{1-n}$) have an orthogonality to each other of at least 40 dB.

13. The method of claim 11 or claim 12, wherein the plurality of transceivers ($1101_{1-Nrow}$, $1102_{1-Ncol}$) sequentially transmit the sensing signals ($701_{1-n}$) to the plurality of touch sensing electrodes ($row_{1-Nrow}$, $col_{1-Ncol}$) with a circular correlation over successive frames of sensing signals ($701_{1-n}$) sent to and received from the touch sensing electrodes ($row_{1-Nrow}$, $col_{1-Ncol}$).

14. The method of any one of claims 10 to 13, wherein each sensing signal sent to one of the touch sensing electrodes ($row_{1-Nrow}$, $col_{1-Ncol}$) is in the form of a chirp, the range of frequencies ($702_{1-n}$) in each chirp varying from a minimum frequency ($704_{1-n}$) to a maximum frequency ($705_{1-n}$).

15. The method of claim 14, wherein the minimum frequency ($704_{1-n}$) for the plurality of sensing signals over the plurality of transceivers ranges from a lower minimum frequency to an upper minimum frequency, the range of frequencies in each chirp varying linearly, non-linearly or quadratically from the minimum to maximum frequency.

**Amended claims in accordance with Rule 137(2) EPC.**

1. A touch screen sensing system (1100) comprising:

   a touch screen panel (1103) having a plurality of pairs of touch sensing electrodes ($roW_{1-Nrow}$, $col_{1-Ncol}$) arranged in rows and columns extending across the panel (1103); and
   a plurality of transceivers ($1101_{1-Nrow}$, $1102_{1-Ncol}$), each of the plurality of transceivers ($1101_{1-Nrow}$, $1102_{1-Ncol}$) connected to send and receive sensing signals ($701_{1-n}$) to and from a respective one of the plurality of touch sensing electrodes ($row_{1-Nrow}$, $col_{1-Ncol}$),
   wherein each one of the plurality of transceivers ($1101_{1-Nrow}$, $1102_{1-Ncol}$) is configured to transmit a sensing signal ($701_{1-n}$) including a range of frequencies over a signal bandwidth ($702_{1-n}$), the sensing signals ($701_{1-n}$) being orthogonal to each other,
   **characterized in that** the plurality of transceivers ($1101_{1-Nrow}$, $1102_{1-Ncol}$) are arranged to sequentially transmit the sensing signals ($701_{1-n}$) to the plurality of touch sensing electrodes ($row_{1-Nrow}$, $col_{1-Ncol}$) with a circular correlation over successive frames of sensing signals ($701_{1-n}$) sent to and received from the touch sensing electrodes ($row_{1-Nrow}$, $col_{1-Ncol}$).

2. The touch screen sensing system (1100) of claim 1, wherein each sensing signal ($701_{1-n}$) sent to one of the touch sensing electrodes ($row_{1-Nrow}$, $col_{1-Ncol}$) is in the form of a chirp, the range of frequencies ($702_{1-n}$) in each chirp varying from a minimum frequency ($704_{1-n}$) to a maximum frequency ($705_{1-n}$).

3. The touch screen sensing system (1100) of claim 2, wherein the minimum frequency ($704_{1-n}$) for the plurality of sensing signals over the plurality of transceivers ($1101_{1-Nrow}$, $1102_{1-Ncol}$) ranges from a lower minimum frequency ($704_1$) to an upper minimum frequency ($704_n$).

4. The touch screen sensing system (1100) of claim 2 or claim 3, wherein the maximum frequency ($705_{1-n}$) over the plurality of transceivers ranges from a lower maximum frequency ($705_1$) to an upper maximum frequency ($705_n$).

5. The touch screen sensing system (1100) of any one of claims 2 to 4, wherein the range of frequencies ($702_{1-n}$) in each chirp varies linearly, non-linearly or quadratically between the minimum and maximum frequencies ($704_{1-n}$, $705_{1-n}$).

6. The touch screen sensing system (1100) of any preceding claim, wherein the plurality of transceivers ($1101_{1-Nrow}$, $1102_{1-Ncol}$) comprise a first plurality of row transceivers ($1101_{1-Nrow}$) and a second plurality of column transceivers ($1102_{1-Ncol}$).

7. The touch screen sensing system (1100) of claim 6, wherein each column transceiver ($1102_{1-Ncol}$) comprises a receiver that is configured to calculate and output a correlation between a received signal and each of a plurality of expected signals corresponding to sensing signals transmitted by the plurality of row transceivers.

8. The touch screen sensing system (1100) of claim 7, wherein each receiver (1302) in the plurality of column transceivers ($1102_{1-Ncol}$) is configured to apply a decorrelation matrix (1303) to the output correlation to provide a calibrated output correlation.

9. A method of operating a touch screen sensing system (1100) comprising:

a touch screen panel (1103) having a plurality of pairs of touch sensing electrodes ($roW_{1\text{-}Nrow}$, $col_{1\text{-}Ncol}$) arranged in rows and columns extending across the panel (1103); and

a plurality of transceivers ($1101_{1\text{-}Nrow}$, $1102_{1\text{-}Ncol}$), each of the plurality of transceivers connected to send and receive sensing signals ($701_{1\text{-}n}$) to and from a respective one of the plurality of touch sensing electrodes ($roW_{1\text{-}Nrow}$, $col_{1\text{-}Ncol}$),

the method comprising transmitting a plurality of sensing signals ($701_{1\text{-}n}$) over a signal bandwidth ($702_{1\text{-}n}$) from each of the plurality of transceivers ($1101_{1\text{-}Nrow}$, $1102_{1\text{-}Ncol}$), each sensing signal including a range of frequencies over the signal bandwidth ($702_{1\text{-}n}$), the sensing signals ($701_{1\text{-}n}$) being orthogonal to each other,

**characterized in that** the plurality of transceivers ($1101_{1\text{-}Nrow}$, $1102_{1\text{-}Ncol}$) sequentially transmit the sensing signals ($701_{1\text{-}n}$) to the plurality of touch sensing electrodes ($roW_{1\text{-}Nrow}$, $col_{1\text{-}Ncol}$) with a circular correlation over successive frames of sensing signals ($701_{1\text{-}n}$) sent to and received from the touch sensing electrodes ($row_{1\text{-}Nrow}$, $col_{1\text{-}Ncol}$).

10. The method of claim 9, wherein each sensing signal sent to one of the touch sensing electrodes ($row_{1\text{-}Nrow}$, $col_{1\text{-}Ncol}$) is in the form of a chirp, the range of frequencies ($702_{1\text{-}n}$) in each chirp varying from a minimum frequency ($704_{1\text{-}n}$) to a maximum frequency ($705_{1\text{-}n}$).

11. The method of claim 10, wherein the minimum frequency ($704_{1\text{-}n}$) for the plurality of sensing signals over the plurality of transceivers ranges from a lower minimum frequency to an upper minimum frequency, the range of frequencies in each chirp varying linearly, non-linearly or quadratically from the minimum to maximum frequency.

**101** →

| |
|---|
| Cover Glass <u>109</u> |
| Polarizer <u>108</u> |
| Electrodes <u>107</u> |
| Colour Filter <u>106</u> |
| Liquid Crystal <u>105</u> |
| TFT Glass <u>104</u> |
| Polarizer <u>103</u> |

**Fig. 1a**

**102** →

| |
|---|
| Cover Glass <u>115</u> |
| Polarizer <u>114</u> |
| Electrodes <u>113</u> |
| Encapsulation Layer <u>112</u> |
| OLED <u>111</u> |
| TFT Glass <u>110</u> |

**Fig. 1b**

EP 4 745 731 A1

Fig. 2

EP 4 745 731 A1

$$t \in \{m_l\} \cup \{self, tch1, tch2\}$$
$$r \in \{row_l, l = 1..N_{row}\} \cup \{col_c, c = 1..N_{col}\}$$

Fig. 3

Fig. 5

Fig. 4

Fig. 6

frequency

TXn

TX1  TX2

Signal bandwidth

601

SNR (Panel response)

EP 4 745 731 A1

Fig. 7

Fig. 8a

Fig. 8b

Fig. 9b

Fig. 9a

EP 4 745 731 A1

Fig. 10a

Fig. 10b

1100

$T_t^{row_1}$ → Transceiver **1101₁**

$C_r^{row_1}$ →

$K_r^{row_1}$ ←

col₁   col$_{Ncol}$

row₁

Panel **1103**

$T_t^{row_{N_{row}}}$ → Transceiver **1101$_{Nrow}$**

$C_r^{row_{N_{row}}}$ →

$K_r^{row_{N_{row}}}$ ←

row$_{Nrow}$

TX gen → $T_t^x$

RX gen → $C_r^x$

$K_r^x$ → $\begin{pmatrix} decorrelation \\ ( \quad ) \\ matrix\ j*2*\pi* \end{pmatrix}$ → $H_r^x$

Transceiver **1102₁**    Transceiver **1102$_{Ncol}$**

$T_t^{col_1}$  $C_r^{col_1}$  $K_r^{col_1}$     $T_t^{col_{N_{col}}}$  $C_r^{col_{N_{col}}}$  $K_r^{col_{N_{col}}}$

$t \in \{m_l\} \cup \{self, tch1, tch2\}$

$r \in \{row_l, l = 1..N_{row}\} \cup \{col_c, c = 1..N_{col}\}$

Fig. 11

Fig. 13

Fig. 12

Fig. 14

EP 4 745 731 A1

```
┌─────────────────────┐
│    DECORRELATION    │
│       MATRIX        │
└─────────────────────┘
           │
           ▼
┌─────────────────────┐
│  for each TX signal │
│    Indexed 't'      │
│     (series)        │
└─────────────────────┘
           │
           ▼
┌─────────────────────┐
│     @TX side        │
│    sⱼ#sₜ off         │
│  sₜ on @FS (full scale) │
└─────────────────────┘
           │
           ▼
┌─────────────────────┐
│   for all RX 'x'    │
│  measuring 't' (r=t)│
│    (concurrent)     │
└─────────────────────┘
```

$$\text{Average Nf frames}$$
$$\left[V_{r,t}^x\right] = average(V_{r,t}^x)$$

$$\left[D_{r,r}^x\right] = inv(\left[V_{r,t}^x\right])$$

end

Fig. 15

EP 4 745 731 A1

CALIBRATION
PROCESS
start

clean noise
smooth($rx_{x,t}$)

optional

remove offset
nooffset($rx_{x,t}$)

normalize
normalize($rx_{x,t}$)

optional

store $rx_{x,t}$
$C_t^x = rx_{x,t}$

end

Fig. 16

EP 4 745 731 A1

```
┌─────────────────────────┐
│   CALIBRATION PROCESS   │
│          start          │
└─────────────────────────┘
             │
             ▼
┌─────────────────────────┐
│    RAW DATA PROCESS     │
│          rx_{x,t}       │
└─────────────────────────┘
             │
             ▼
┌─────────────────────────────┐
│     For Td=-Nd to +Nd       │
│  (concurrent/serie process)(*)│
└─────────────────────────────┘
             │
             ▼
┌───────────────────────────────────────┐
│           cross-correlation           │
│  K_t^x(Td) = cross( delay(s_t,Td), rx_{x,t} )  │
└───────────────────────────────────────┘
             │
             ▼
┌───────────────────────────────────────┐
│  Select Td_{r,t} that provides highest │
│                result                  │
└───────────────────────────────────────┘
             │
             ▼
          ( end )
```

For Td=-Nd to +Nd (concurrent/serie process)$^{(*)}$

cross-correlation
$$K_t^x(Td) = cross(\ delay(s_t, Td),\ rx_{x,t}\ )$$

Select $Td_{r,t}$ that provides highest result

Fig. 17

CALIBRATION PROCESS
start

RAW DATA PROCESS
$rx_{x,t}$

AMP POLYNOMIAL FIT
PROCESS

} optional

PHASE POLYNOMIAL
FIT PROCESS

end

Fig. 18

AMP POLYNOMIAL FIT
PROCESS
start

find pos peaks 'j'
$\{(ipp,vpp)_{x,t,j}\}=pospeaks(rx_{x,t})$

find neg peaks 'k'
$\{(inp,vnp)_{x,t,k}\}=negpeaks(rx_{x,t})$

} 1 or both

build amplitude vector
*according to selection*

$XY_{x,i}=\{\}$
$XY_{x,t}=XY_{x,t} \cup \{(ipp,vpp)_{x,t,j}\}$
$XY_{x,t}=XY_{x,t} \cup \{(inp,vnp)_{x,t,k}\}$
$XY_{x,t}=xsort(XY_{x,t})$

polynomial fit order nth
$Amp_{x,t,n}=polyfit(XY_{x,t})$

end

Fig. 19

EP 4 745 731 A1

```
┌─────────────────────────┐
│   PHASE POLYNOMIAL      │
│    FIT PROCESS          │
│       start            │
└─────────────────────────┘
            │
            ▼
```

find pos cross '1'
$\{ipc_{x,t,1}\}=poscross(rx_{x,t})$

find pos cross 'm'
$\{inc_{x,t,m}\}=negcross(rx_{x,t})$

find pos peaks 'j'
$\{ipp_{x,t,j}\}=pospeaks(rx_{x,t})$

find neg peaks 'k'
$\{inp_{x,t,k}\}=negpeaks(rx_{x,t})$

at least one

build unwrapped phase vector
*according to selection*

$$XY_{x,i}=\{\}$$
$$XY_{x,t}=XY_{x,t}\ \cup\ \{(ipc_{x,t,1},2\pi)\}$$
$$XY_{x,t}=XY_{x,t}\ \cup\ \{(inc_{x,t,1},\pi)\}$$
$$XY_{x,t}=XY_{r,t}\ \cup\ \{(ipp_{x,t,1},\pi/2)\}$$
$$XY_{x,t}=XY_{x,t}\ \cup\ \{(inp_{x,t,1},3\pi/2)\}$$
$$XY_{x,t}=xsort(XY_{x,t})$$
$$XY_{x,t}=posgrowth(XY_{x,t})$$

polynomial fit order nth
$Pha_{x,t,n}=polyfit(XY_{x,t})$

end

Fig. 20

30

Europäisches
Patentamt

European
Patent Office

Office européen
des brevets

# EUROPEAN SEARCH REPORT

**Application Number**

EP 24 30 6912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/302915 A1 (DARTHENAY FREDERIC [FR] ET AL) 12 September 2024 (2024-09-12) | 1,2,8-12 | INV. G06F3/041 G06F3/044 |
| A | * paragraph [0012] - paragraph [0091]; figures 1-9 * | 3-7, 13-15 | |
| | ----- | | |

TECHNICAL FIELDS SEARCHED (IPC)

G06F

The present search report has been drawn up for all claims

| Place of search | Date of completion of the search | Examiner |
|---|---|---|
| Berlin | 16 April 2025 | Reise, Berit |

EPO FORM 1503 03.82 (P04C01)

## ANNEX TO THE EUROPEAN SEARCH REPORT
## ON EUROPEAN PATENT APPLICATION NO.

EP 24 30 6912

This annex lists the patent family members relating to the patent documents cited in  the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2024302915 A1 | 12-09-2024 | EP 4428662 A1<br>US 2024302915 A1 | 11-09-2024<br>12-09-2024 |

EPO FORM P0459

For more details about this annex : see Official Journal of the European Patent Office, No. 12/82